# EUROPEAN PATENT SPECIFICATION

(11) **EP 2 472 402 B1**
(45) Date of publication and mention of the grant of the patent: **10.07.2013**
(21) Application number: 11164836.6
(22) Date of filing: 04.05.2011
(51) Int. Cl.: G06F 11/30, H04L 12/24

(54) **Remote management systems and methods for mapping operating system and management controller located in a server**
Fernverwaltungssysteme und -verfahren für die Zuordnung eines Betriebssystem und eines Management-Controller in einem Server
Systèmes de gestion à distance et procédés pour le mappage du système d'exploitation et du contrôleur de gestion d'un serveurs

(30) Priority: 29.12.2010 TW 99146545
(43) Date of publication of application: 04.07.2012
(73) Proprietor: Acer Incorporated, Taipei Hsien 221 (TW)
(72) Inventor: Chou, Yung-Chieh, 221, Taipei (TW)
(74) Representative: Michalski Hüttermann & Partner Patentanwälte

(56) References cited:
- US-A1- 2002 156 865
- US-A1- 2005 081 119

## Description

### CROSS REFERENCE TO RELATED APPLICATIONS

This Application claims priority of Taiwan Patent Application No. 099146545, filed on December 29, 2010.

### BACKGROUND OF THE INVENTION

### Field of the Invention

The disclosure relates generally to remote management systems and methods for servers, and, more particularly to systems and methods that automatically search and map information of operating systems and information of management controllers.

### Description of the Related Art

In server management mechanisms, in-band and out-of-band management models complement each other. Also, the management models may have an agent or not.

In the management model having an agent, agent software must be deployed in a target server, which is subject to be managed. A remote management console can obtain related messages, such as configurations of basic hardware such as a processing unit, a memory unit, and a storage unit via the execution of the agent software on the target server. Further, related monitoring data, such as sensor data, system event logs, and power controls such as the voltage, the temperature, and the rotational speed of a fan can be obtained by using IPMI (Intelligent Platform Management Interface) drivers in the agent software. It is noted that, the management of the target server using the agent software must be performed when the operating system of the target server is executed in the in-band model. If the target server is not turned on or the operating system of the target server is not ready, the remote management console will directly obtain the sensor data, system event logs, and power controls from a management controller in the target server in the out-of-band model.

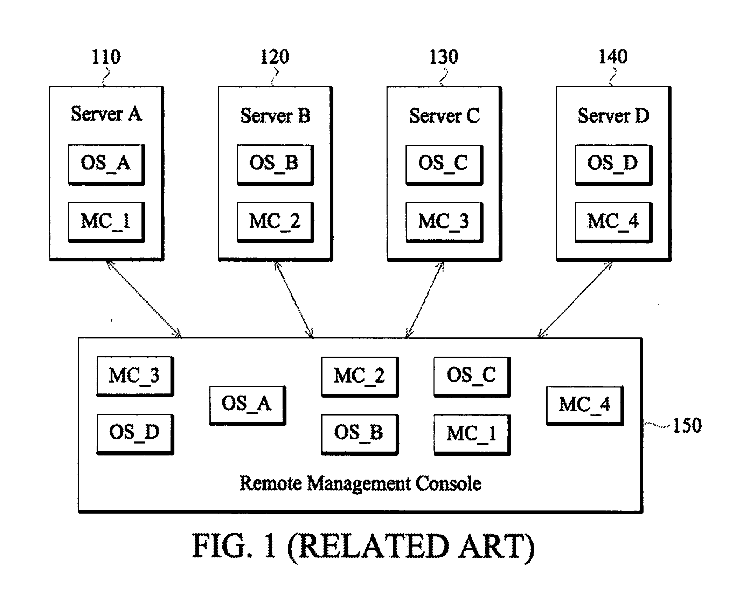

Additionally, in the management model without an agent, no agent software is needed to be deployed in the target server, which is subjected to be managed, thus avoiding the compatibility issue between the agent software and the operating system of the target server. Further, related system resources needed for the agent software can be saved, such that users can conveniently maintain the group of servers. However, the operating systems and the corresponding management controllers cannot be automatically associated in the management model without an agent. Conventionally, users must manually set the mapping relationship between the operating systems and the management controllers. However, when users must deploy and manage a large amount of servers, the searched and obtained information of operating systems and management controllers will be huge. For example, a remote management console 150 manages a server A (110), a server B (120), a server C (130), and a server D (140), as shown in Fig. 1. The remote management console 150 can search to obtain the information of the operating systems (OS_A, OS_B, OS_C, and OS_D) corresponding to the server A (110), server B (120), server C (130), and server D (140) via a network. The remote management console 150 can also search to obtain the information of the management controllers (MC_1, MC_2, MC_3, and MC_4) corresponding to the server A (110), server B (120), server C (130), and server D (140) via the network. Since the above information lacks any mapping basis, the setting and management for the above information in the conventional arts are complicated and time-consuming for users.

Document US 2005/0081119 discloses a remote monitoring and administration system.

### BRIEF SUMMARY OF THE INVENTION

Remote management systems and methods for servers are provided.

An embodiment of a remote management system for servers includes at least one server and a remote management console. The server has an operating system, and includes at least one hardware component and a management controller, wherein the management controller obtains identification data corresponding to the hardware component. The remote management console searches information of the operating system and the management controller via a network. The remote management console obtains the identification data of the hardware component from the operating system, and obtains the identification data of the hardware component from the management controller. The remote management console maps the operating system and the management controller based on the identification data respectively obtained from the operating system and the management controller.

In an embodiment of a remote management method for servers, information of an operating system and a management controller of at least one server is searched via a network, wherein the management controller obtains identification data corresponding to a hardware component in the server. Then, the identification data of the hardware component is obtained from the operating system, and the identification data of the hardware component is obtained from the management controller. Then, the operating system and the management controller are mapped based on the identification data respectively obtained from the operating system and the management controller.

In some embodiments, the remote management control obtains the identification data of the hardware component from the operating system in an in-band management model, and the remote management control searches and obtains the information of the management controller in an out-of-band management model.

In some embodiments, the management controller obtains the identification data of the hardware component from a BIOS (Basic Input/Output System) during a POST (Power On Self Test) procedure of the server.

In some embodiments, the hardware component comprises a network adapter, a BIOS, a motherboard, a storage unit, or a processing unit.

Remote management methods for servers may take the form of a program code embodied in a tangible media. When the program code is loaded into and executed by a machine, the machine becomes an apparatus for practicing the disclosed method.

The invention is carried out by the system of independent claim 1 the method of independent claim 6 and the medium of independent claim 11.

### BRIEF DESCRIPTION OF THE DRAWINGS

The invention will become more fully understood by referring to the following detailed description with reference to the accompanying drawings, wherein:

Fig. 1 is a schematic diagram illustrating an example of remote management for servers of conventional arts;

Fig. 2 is a schematic diagram illustrating an embodiment of a remote management system for servers of the invention;

Fig. 3 is a flowchart of an embodiment of a method for obtaining identification data of a hardware component by a management controller;

Fig. 4 is a flowchart of an embodiment of a remote management method for servers of the invention; and

Fig. 5 is a schematic diagram illustrating an example of remote management for servers of the invention.

### DETAILED DESCRIPTION OF THE INVENTION

Remote management systems and methods for servers are provided.

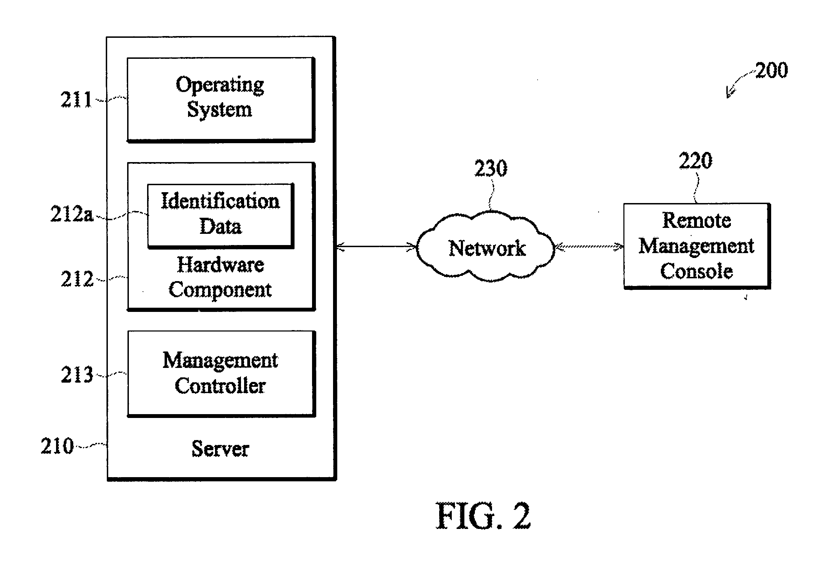

Fig. 2 is a schematic diagram illustrating an embodiment of a remote management system for servers of the invention.

The remote management system for servers 200 comprises at least one server 210 and a remote management console 220. The remote management console 220 can couple to the server 210 via a network 230, thus to manage and monitor the execution of the server 210. For example, the remote management console 220 can obtain related monitoring data, such as sensor data, system event logs, and power controls such as the voltage, the temperature, and the rotational speed of a fan from the server 210. The server 210 has an operating system 211, at least one hardware component 212, and a management controller 213. The operating system 211 can manage the execution of related hardware and software resources in the server 210. The hardware component 212 can comprise a network adapter, a BIOS, a motherboard, a storage unit, or a processing unit. The hardware component 212 may have identification data 212a. For example, when the hardware component 212 is a network adapter, the identification data 212a of the hardware component 212 may be a MAC (Media Access Control) address of the network adapter. It is noted that, the above hardware components are only examples of the embodiment, and any hardware component having a unique identification code which can be used to recognize the identity can be also applied in the present invention. The management controller 213 can conform to the standard of IPMI, and perform related management operations for the server 210. In some embodiments, the management controller 213 may be implemented by a BMC (Baseboard Management Controller); however, the present invention is not limited thereto, and other types of management controllers can be also applied in the present invention. In some embodiments, the management controller 213 can provide functions of automatic monitoring, event logging, message warning, and recovery control. The management controller 213 can monitor the statuses of related components on the server 210 via various sensors on the motherboard of the server 210, store related data of the sensors, and record system events. Further, when the management controller 213 discovers that any component is abnormal, the management controller 213 can perform a corresponding measure.

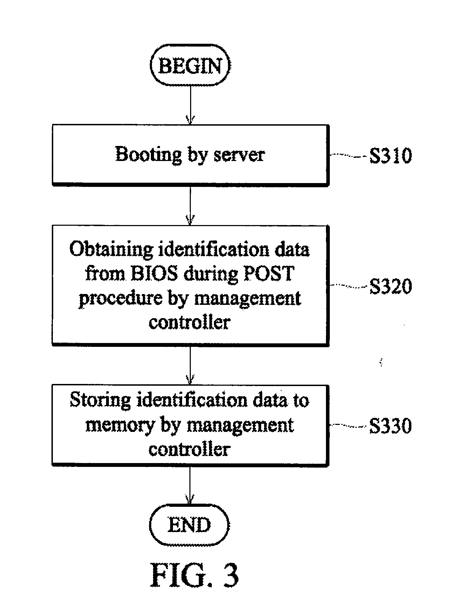

It is understood that, in the present application, the management controller 213 can obtain the identification data of a specific hardware component in the server 210. Fig. 3 is a flowchart of an embodiment of a method for obtaining identification data of a hardware component by a management controller. In step S310, the server 210 is booted. In step S320, the server 210 performs a POST procedure, and the management controller 213 obtains the identification data 212a of the hardware component 212 from a BIOS during the POST procedure. After the identification data 212a of the hardware component 212 is obtained, in step S330, the management controller 213 stores the identification data 212a to a memory in the management controller 213. It is understood that, after the identification data 212a of the hardware component 212 is stored, dedicated commands can be defined using the OEM (Original Equipment Manufacture) extended commands of IPMI. With this design, as long as the remote management console knows the dedicated commands, the dedicated commands can be transmitted to the management controller 213 to obtain the identification data 212a of the hardware component 212.

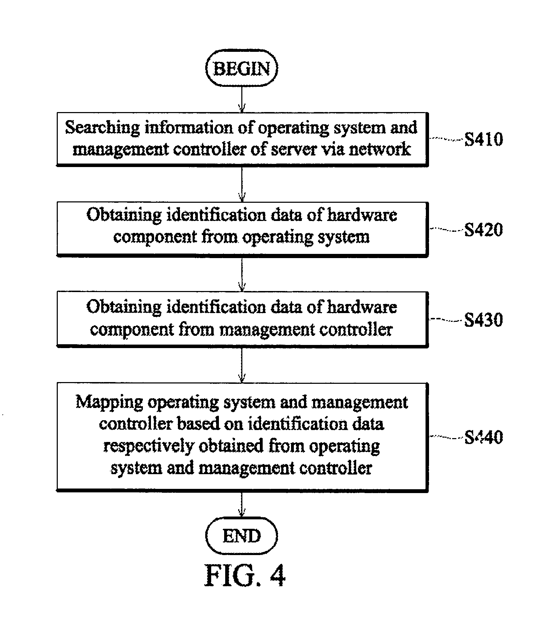

Fig. 4 is a flowchart of an embodiment of a remote management method for servers of the invention. The remote management method for servers can be used in a remote management console.

In step S410, information of an operating system and a management controller of at least one server is searched via a network. It is understood that, the management controller can obtain the identification data of a hardware component in the server. It is noted that, the management controller can obtain the identification data of the hardware component according to the embodiment of Fig. 3. It is understood that, in some embodiments, the remote management console can receive an input corresponding to a network section, and the remote management console can search the information of operating systems and management controllers within the network section via the network. It is noted that, the information of the operating system can be searched in the in-band management model, and the information of the management controller can be searched in the out-of-band management model. In step S420, the identification data of a hardware component is obtained from the operating system. It is understood that, in some embodiments, the identification data of the hardware component used by the operating system of the server can be obtained by the operating system of the remote management console using a WMI (Windows Management Instrumentation) or SSH (Secure Shell). In step S430, the identification data of the hardware component is obtained from the management controller. As described, after the identification data 212a of the hardware component 212 is stored by the management controller 213, dedicated commands can be defined using the OEM extended commands of IPMI. In some embodiments, the remote management console can use the OEM extended commands of IPMI to obtain the identification data of the hardware component from the management controller according to a network address recorded in the information of the management controller. After the identification data is respectively obtained from the operating system and the management controller, in step S440, the operating system and the management controller are mapped based on the identification data respectively obtained from the operating system and the management controller.

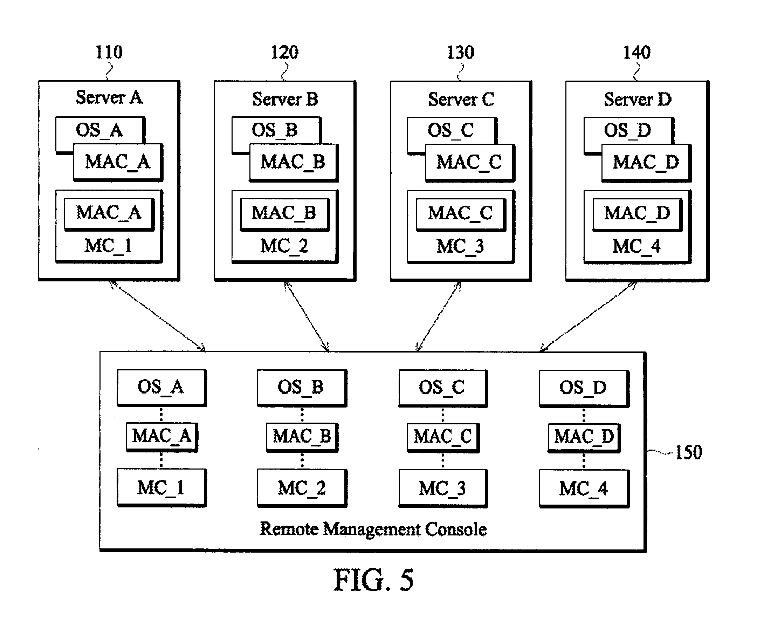

For example, the management environment of Fig. 1 can be applied with the remote management method for servers of the present application, as shown in Fig. 5. Since the management controller in each server can record the identification data (MAC_A, MAC_B, MAC_C, and MAC_D) of the hardware component, the identification data recorded by the management controller and the identification data recorded by the operating system can be determined whether they are matched or not. When the identification data recorded by the management controller and the identification data recorded by the operating system matches, the corresponding management controller and the operating system are mapped, thus to establish the association between the management controller and the operating system.

Therefore, the remote management systems and methods for servers can automatically search and map information of operating systems and information of management controllers, thus reducing resource consumption required for manually setting and mapping of the above mentioned information, which is an improvement over the conventional prior art.

Remote management methods for servers, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Therefore, the scope of the present invention shall be defined and protected by the following claims.

## Claims

1. A remote management system for servers, comprising:
a server (210) having an operating system (211), and comprising at least one hardware component (212) and a management controlle (213), wherein the management controller is configured to obtain identification data of the hardware component; and
a remote management console (220), for searching information of the operating system and the management controller via a network (230), obtaining the identification data (212a) of the hardware component from the operating system, obtaining the identification data of the hardware component from the management controller, and mapping the operating system and the management controller based on the identification data respectively obtained from the operating system and the management controller.

2. The system of claim 1, wherein the information of the operating system is searched in an in-band management model, and the information of the management controller is searched in an out-of-band management model.

3. The system of claim 1, wherein the management controller is configured to obtain the identification data of the hardware component from a BIOS (Basic Input/Output System) during a POST (Power On Self Test) procedure of the server.

4. The system of claim 1, wherein the hardware component comprises a network adapter, a BIOS, a motherboard, a storage unit, or a processing unit.

5. The system of claim 1, wherein the remote management console is further configured to receive an input corresponding to a network section, and the remote management console is configured to searche the information of the operating system and the management controller within the network section via the network.

6. A remote management method for servers, applied to a remote management console (220), comprising:
searching information of an operating system (211) and a management controller of at least one server (210) via a network (230), wherein the management controller obtains identification data (212a) of a hardware component (212) of the server;
obtaining the identification data of the hardware component from the operating system;
obtaining the identification data of the hardware component from the management controller; and
mapping the operating system and the management controller based on the identification data respectively obtained from the operating system and the management controller.

7. The method of claim 6, wherein the information of the operating system is searched in an in-band management model, and the information of the management controller is searched in an out-of-band management model.

8. The method of claim 6, wherein the management controller obtains the identification data of the hardware component from a BIOS (Basic Input/Output System) during a POST (Power On Self Test) procedure of the server.

9. The method of claim 6, wherein the hardware component comprises a network adapter, a BIOS, a motherboard, a storage unit, or a processing unit.

10. The method of claim 6, further comprising:
receiving an input corresponding to a network section, and searching the information of the operating system and the management controller within the network section via the network.

11. A machine-readable storage medium comprising a computer program, which, when executed, causes a device to perform a remote management method for servers, wherein the method comprises:
searching information of an operating system (211) and a management controller (213) of at least one server (210) via a network (230), wherein the management controller obtains identification data (212a) of a hardware component (212) of the server;
obtaining the identification data of the hardware component from the operating system;
obtaining the identification data of the hardware component from the management controller; and
mapping the operating system and the management controller based on the identification data respectively obtained from the operating system and the management controller.

## Patentansprüche

1. Fernmanagementsystem für Server, mit:
einem Server (210) mit einem Betriebssystem (211) und mit mindestens einer Hardwarekomponente (212) und einem Managementcontroller (213), wobei der Managementcontroller dafür konfiguriert ist, Identifizierungsdaten der Hardwarekomponente zu erhalten; und
einer Fernmanagementkonsole (220) zum Suchen von Information über das Betriebssystem und den Managementcontroller über ein Netzwerk (230), Erhalten der Identifizierungsdaten (212 a) der Hardwarekomponente vom Betriebssystem, Erhalten der Identifizierungsdaten der Hardwarekomponente vom Managementcontroller und Abbilden (Mapping) des Betriebssystems und des Managementcontrollers basierend auf den vom Betriebssystem bzw. vom Managementcontroller erhaltenen Identifizierungsdaten.

2. System nach Anspruch 1, wobei die Information über das Betriebssystem in einem In-Band-Managementmodell und die Information über den Managementcontroller in einem Out-Of-Band-Managementmodell gesucht wird.

3. System nach Anspruch 1, wobei der Managementcontroller dafür konfiguriert ist, die Identifizierungsdaten der Hardwarekomponente während einer POST-(Power On Self Test) Prozedur des Servers von einem BIOS (Basic Input/Output System) zu erhalten.

4. System nach Anspruch 1, wobei die Hardwarekomponente einen Netzwerkadapter, ein BIOS, ein Motherboard, eine Speichereinheit oder eine Verarbeitungseinheit aufweist.

5. System nach Anspruch 1, wobei die Fernmanagementkonsole ferner dafür konfiguriert ist, ein einem Netzwerkabschnitt entsprechendes Eingangssignal zu empfangen, und wobei die Fernmanagementkonsole dafür konfiguriert ist, die Information über das Betriebssystem und den Managementcontroller innerhalb des Netzwerkabschnitts über das Netzwerk zu suchen.

6. Fernmanagementverfahren für Server, das auf eine Fernmanagementkonsole (220) angewendet wird, mit den Schritten:
Suchen von Information über ein Betriebssystem (211) und einen Managementcontroller mindestens eines Servers (210) über ein Netzwerk (230), wobei der Managementcontroller Identifizierungsdaten (212 a) einer Hardwarekomponente (212) des Servers erhält;
Erhalten der Identifizierungsdaten der Hardwarekomponente vom Betriebssystem;
Erhalten der Identifizierungsdaten der Hardwarekomponente vom Managementcontroller; und
Abbilden des Betriebssystems und des Managementcontrollers basierend auf den Identifizierungsdaten, die vom Betriebssystem bzw. vom Managementcontroller erhalten werden.

7. Verfahren nach Anspruch 6, wobei die Information über das Betriebssystem in einem In-Band-Managementmodell und die Information über den Managementcontroller in einem Out-Of-Band-Managementmodell gesucht wird.

8. Verfahren nach Anspruch 6, wobei der Managementcontroller die Identifizierungsdaten der Hardwarekomponente während einer POST- (Power On Self Test) Prozedur des Servers von einem BIOS (Basic Input/Output System) erhält.

9. Verfahren nach Anspruch 6, wobei die Hardwarekomponente einen Netzwerkadapter, ein BIOS, ein Motherboard, eine Speichereinheit oder eine Verarbeitungseinheit aufweist.

10. Verfahren nach Anspruch 6, ferner mit den Schritten zum Empfangen eines einem Netzwerkabschnitt entsprechenden Eingangssignals und Suchen der Information über das Betriebssystem und den Managementcontroller innerhalb des Netzwerkabschnitts über das Netzwerk.

11. Maschinenlesbares Speichermedium mit einem Computerprogramm, das, wenn es ausgeführt wird, ein Gerät veranlasst, ein Fernmanagementverfahren für Server auszuführen, wobei das Verfahren die Schritte aufweist:
Suchen von Information über ein Betriebssystem (211) und einen Managementcontroller mindestens eines Servers (210) über ein Netzwerk (230), wobei der Managementcontroller Identifizierungsdaten (212 a) einer Hardwarekomponente (212) des Servers erhält;
Erhalten der Identifizierungsdaten der Hardwarekomponente vom Betriebssystem;
Erhalten der Identifizierungsdaten der Hardwarekomponente vom Managementcontroller; und
Abbilden (Mapping) des Betriebssystems und des Managementcontrollers basierend auf den Identifizierungsdaten, die vom Betriebssystem bzw. vom Managementcontroller erhalten werden.

## Revendications

1. Système de gestion à distance pour des serveurs, comprenant :
un serveur (210) comportant un système d'exploitation (211) et comprenant au moins un composant informatique (212) et un contrôleur de gestion (213), dans lequel le contrôleur de gestion est configuré pour obtenir des données d'identification du composant informatique ; et
une console de gestion à distance (220) pour la recherche d'informations du système d'exploitation et du contrôleur de gestion par le biais d'un réseau (230), pour l'acquisition de données d'identification (212a) du composant informatique venant du système d'exploitation, pour l'acquisition des données d'identification du composant informatique venant du contrôleur de gestion, et pour le mappage du système d'exploitation et du contrôleur de gestion à partir des données d'identification respectivement reçues par le système d'exploitation et le contrôleur de gestion.

2. Système selon la revendication 1, dans lequel les informations du système d'exploitation sont recherchées dans un modèle de gestion en bande, tandis que les informations du contrôleur de gestion sont recherchées dans un modèle de gestion hors bande.

3. Système selon la revendication 1, dans lequel le contrôleur de gestion est configuré pour obtenir les données d'identification du composant informatique à partir d'un BIOS (Système entrée/sortie basique) pendant une opération de POST (test d'autodiagnostic) du serveur.

4. Système selon la revendication 1, dans lequel le composant informatique comprend un adaptateur réseau, un BIOS, une carte mère, une mémoire ou une unité de traitement.

5. Système selon la revendication 1, dans lequel la console de gestion à distance est en outre configurée pour recevoir une entrée correspondant à une section de réseau, et la console de gestion à distance est configurée pour rechercher les informations du système d'exploitation et du contrôleur de gestion dans la section de réseau, par le biais du réseau.

6. Procédé de gestion à distance pour des serveurs, appliqué à une console de gestion à distance (220), comprenant :
la recherche d'informations d'un système d'exploitation (211) et d'un contrôleur de gestion d'au moins un serveur (210) par le biais d'un réseau (230), dans lequel le contrôleur de gestion obtient des données d'identification (212a) d'un composant informatique (212) du serveur ; i
l'obtention des données d'identification du composant informatique venant du système d'exploitation ;
l'obtention des données d'identification du composant informatique venant du contrôleur de gestion ; et
le mappage du système d'exploitation et du contrôleur de gestion à partir des données d'identification obtenues par le système d'exploitation et le contrôleur de gestion.

7. Procédé selon la revendication 6, dans lequel les informations du système d'exploitation sont recherchées dans un modèle de gestion en bande, tandis que les informations du contrôleur de gestion sont recherchées dans un modèle de gestion hors bande.

8. Procédé selon la revendication 6, dans lequel le contrôleur de gestion obtient les données d'identification du composant informatique à partir d'un BIOS (Système entrée/sortie basique) pendant une opération de POST (test d'autodiagnostic) du serveur.

9. Procédé selon la revendication 6, dans lequel le composant informatique comprend un adaptateur réseau, un BIOS, une carte mère, une mémoire ou une unité de traitement.

10. Procédé selon la revendication 6, comprenant en outre :
la réception d'une entrée correspondant à une section de réseau, et la recherche des informations du système d'exploitation et du contrôleur de gestion dans la section de réseau, par le biais du réseau.

11. Moyen de stockage lisible par ordinateur, comprenant un programme informatique, lequel, lorsqu'il est exécuté, entraîne un dispositif à exécuter un procédé de gestion à distance pour des serveurs, dans lequel le procédé comprend :
la recherche d'informations d'un système d'exploitation (211) et d'un contrôleur de gestion (213) d'au moins un serveur (210) par le biais d'un réseau (230), dans lequel le contrôleur de gestion obtient des données d'identification (212a) d'un composant informatique (212) du serveur ;
l'obtention des données d'identification du composant informatique venant du système d'exploitation ;
l'obtention des données d'identification du composant informatique venant du contrôleur de gestion ; et
le mappage du système d'exploitation et du contrôleur de gestion à partir des données d'identification obtenues par le système d'exploitation et le contrôleur de gestion.
